## Europäisches Patentamt

## European Patent Office

## Office européen des brevets

(11) Publication number: **0 032 451**
**B1**

(12) **EUROPEAN PATENT SPECIFICATION**

(45) Date of publication of patent specification: **02.05.85**

(51) Int. Cl.⁴: **F 16 D 3/20**

(21) Application number: **81300121.1**

(22) Date of filing: **13.01.81**

(54) Universal joint member manufacture.

(30) Priority: **15.01.80 GB 8001328**

(43) Date of publication of application:
**22.07.81 Bulletin 81/29**

(45) Publication of the grant of the patent:
**02.05.85 Bulletin 85/18**

(84) Designated Contracting States:
**AT BE CH DE FR GB IT LI LU NL SE**

(56) References cited:
**DE-C- 224 998**
**FR-A-1 320 656**
**FR-A-1 352 259**
**FR-A-1 373 583**
**FR-A-2 271 444**
**FR-E- 91 582**
**US-A-1 371 750**
**US-A-1 382 720**

(73) Proprietor: **HARDY SPICER LIMITED**
**Chester Road**
**Erdington Birmingham B24 ORB (GB)**

(72) Inventor: **Sankey, Ivor George**
**7 Baxterley Green Walmley**
**Sutton Coldfield Staffs. (GB)**
Inventor: **Fisher, Audley**
**130 Demontfort Way**
**Cannon Park Coventry (GB)**

(74) Representative: **Dodd, Graham Marshall et al**
**Guest Keen and Nettlefolds plc Group Patents**
**and Licensing Department P.O. Box 55 Ipsley**
**House Ipsley Church Lane**
**Redditch Worcestershire B98 0TL (GB)**

Courier Press, Leamington Spa, England.

## Description

This invention relates to constant velocity ratio universal joints of the type comprising an inner member having a number of circumferentially spaced radially outwardly extending arms each of which carries a roller element, the roller elements engaging in longitudinally extending grooves in an outer joint member so that torque can be transmitted between the inner and outer joint members whilst accommodating angular misalignment between the rotational axes of the members. Such a joint will hereafter be referred to as a joint of the kind specified, and is usually known as a tripode joint or bipode joint if the inner member has three or two arms, respectively.

The most usual configuration of the inner member of a joint of the kind specified at present is a component in the form of a ring integral with the arms which extend outwardly therefrom, such component being made by forging. The ring has a splined interior for receiving a removable shaft. This construction has a disadvantage in that the torque transmitting capacity of the joint is limited by the dimensions of the ring and the splined connection between the ring and shaft. This is because such connection is effective at a small radius compared with that at which the connection between the rollers and joint outer member is effective, giving rise to relatively high stresses. To increase the capacity of the joint, the splined end of the shaft engaging in the inner member must be made larger, which means that the size of the joint as a whole must be increased, to a size greater than that which would be necessary if its capacity were determined solely by the loads acceptable in the engagement of the rollers with the joint outer member.

It has been proposed in FR—E—91582, that the necessity for a splined connection between the shaft and inner joint member can be avoided by providing the shaft with an enlarged end portion having radially outwardly facing bores in which individual arm components are received. The innermost ends of the arm components are welded together to secure the arms in position, access for such welding being gained through a bore extending axially from the ends of the shaft. However, it is necessary for the radial bores in the end part of the shaft to be drilled with great accuracy, since it is vital to the function of the joint that the arms are equally spaced and correctly oriented relative to one another. It would be desirable to eliminate the necessary for drilling the end portion of the shaft.

It has further been proposed, in FR—A—1320656 and FR—A—1373583, that the cross member of a Hookes type universal joint can be made from separate components instead of a single integral component as is usually the case. However, in a Hookes universal joint there is no requirement for the cross-member to be connected at the end of the shaft with the arms extending radially outwardly therefrom, and the constructions of cross member taught would not be readily adaptable to be applied to a joint of the type with which the present invention is concerned.

It is the object of the present invention to overcome or reduce the disadvantages above described.

According to the invention, we provide a method of making an inner member for a universal joint comprising a shaft component with an end portion receiving a plurality of circumferentially spaced radially outwardly extending arms for carrying roller elements, which arms are secured together in the required orientation to each other by welding at their innermost ends and which are secured to the end portion of the shaft component characterised in that said method comprises the steps of forming the shaft component in its end portion with an axially presented recess having portions for receiving the arms; introducing the arms axially into said recess and securing said arms to the shaft component by welding and/or deformation of the shaft component end portion.

By making the joint inner member according to this method, the need for provision of a splined connection with a shaft component is avoided. The arms can relatively easily be made as individual components, e.g. from bar stock, and there is no complex forging operation as common hitherto.

The shaft component may be made by a cold forming process, since boring thereof to receive individual arms is not required.

These and other features of the invention will now be described by way of example with reference to the accompanying drawings, in which:

Figure 1 is a perspective view illustrating a construction of inner member of a universal joint according to the invention.

Figure 2 is a view of part of the inner member of figure 1.

Referring to the drawings, a construction of inner member for a tripode joint is shown which has a shaft component 30 with an end portion 31 cold formed to present axially a three limbed recess 32. In the recess 32 is received an assembly 33 of three arm components 34 secured together. The assembly 33 is held in the recess in part 31 by welding and/or clenching over the end parts 35 of the wall bounding recess 32.

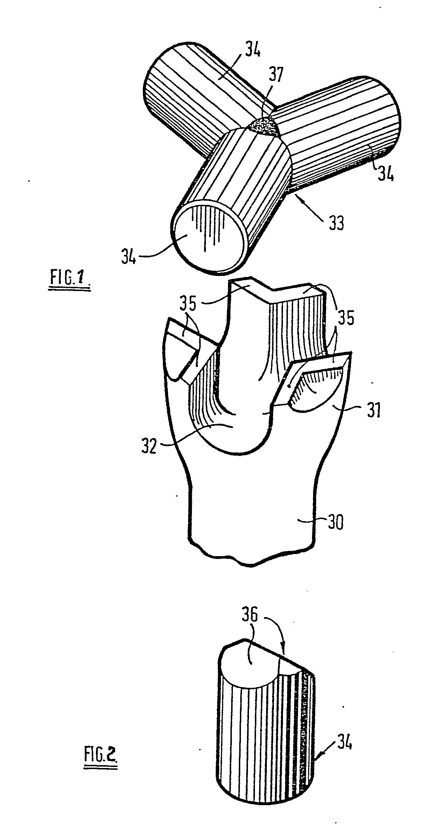

One of the arm components 34 is shown in figure 2. This is of cylindrical form with one end having two chamfers 36 so arranged that three of the components will fit together to form the assembly 33. The components may simply be made from steel bar of appropriate grade. The components 34 are held together to form the assembly 33 by welding at 37.

The production of the inner joint member involves a relatively uncomplicated cold forming operation to form the end 31 of shaft component 30, and the production and securing together of arm components 34 followed by their attachment to the shaft component. Arm components 34 can readily be made on automated machinery and can be finish machined before being secured together. In comparison, the forging techniques used for making inner joint members hitherto are more complex. The splined connection between shaft and inner joint member is avoided leading to an overall reduction in the dimensions of the joint.

A further advantage possible with the invention is that the arms could be headed and assembled with their rollers before being secured together on to the inner joint member, thus avoiding circlips, retaining washers or like components for holding the rollers on the arms.

## Claim

A method of making an inner member for a universal joint comprising a shaft component (30) with an end portion (31) receiving a plurality of circumferentially spaced radially outwardly extending arms (34) for carrying roller elements, which arms are secured together in the required orientation to each other by welding at their innermost ends and which are secured to the end portion (31) of the shaft component (30) characterised in that said method comprises the steps of:

forming the shaft component (30) in its end portion (31) with an axially presented recess (32) having portions for receiving the arms (34),

introducing the arms (34) axially into said recess (32), and

securing said arms to the shaft component (30) by welding and/or deformation of the shaft component end portion (31).

## Patentanspruch

Verfahren zur Herstellung eines Kreuzgelenkinnenteils mit einem Wellenteil (30), das einen Endabschnitt (31) aufweist, der eine Vielzahl von umfangsverteilten, radial nach außen sich erstreckenden Armen (34) zur Lagerung von Rollenelementen aufweist, wobei die Arme in der gewünschten Richtung durch Verschweißen an den inneren Enden miteinander verbunden und an dem Endabschnitt (31) des Wellenteils (30) befestigt sind, gekennzeichnet durch die folgenden Verfahrensschritte:

Ausbildung des Endabschnitts (31) des Wellenteils (30) mit einer achsial sich erstreckenden Ausnehmung (32), die Abschnitte zur Aufnahme der Arme (34) aufweist,

Einführung der Arme (34) in achsialer Richtung in die Ausnehmungen (32), und

Befestigung der Arme an dem Wellenteil (30) durch Schweißen und/oder Verformung des Endabschnitts (31) des Wellenteils.

## Revendication

Procédé de fabrication d'un élément intérieur pour joint universel comprenant un composant arbre (30) muni d'une partie d'extrémité (31) qui reçoit une pluralité de bras (34) destinés à porter des galets, qui s'étendent radialement vers l'extérieur et sont espacés circonférentiellement, lesquels bras sont assemblés les uns aux autres dans l'orientation requise par soudage à leurs extrémités extrêmes intérieures et sont fixés à la partie d'extrémité (31) du composant arbre (30), caractérisé en ce que le dit procédé comprend les phases consistant à: munir le composant arbre (30), dans sa partie d'extrémité (31), d'une cavité présentée axialement (32) qui possède des parties destinées à recevoir les bras (34), introduire axialement les bras (34) dans ladite cavité (32), et fixer lesdits bras au composant arbre (30) par soudage et/ou déformation de la partie d'extrémité (31) du composant arbre.

FIG.1

FIG.2